(19) Europäisches Patentamt
European Patent Office
Office européen des brevets

(11) **EP 4 610 792 A1**

(12) **EUROPEAN PATENT APPLICATION**
published in accordance with Art. 153(4) EPC

(43) Date of publication:
**03.09.2025 Bulletin 2025/36**

(21) Application number: **23907366.1**

(22) Date of filing: **25.10.2023**

(51) International Patent Classification (IPC):
*G06F 3/041* (2006.01)    *G06N 3/0442* (2023.01)

(52) Cooperative Patent Classification (CPC):
**G06F 3/041; G06N 3/0442**

(86) International application number:
**PCT/KR2023/016635**

(87) International publication number:
**WO 2024/136080 (27.06.2024 Gazette 2024/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.12.2022 KR 20220179867
10.02.2023 KR 20230017881**

(71) Applicant: **Samsung Electronics Co., Ltd.
Suwon-si, Gyeonggi-do 16677 (KR)**

(72) Inventors:
• **BAE, Hyechan
Suwon-si, Gyeonggi-do 16677 (KR)**
• **HWANG, Jinyoung
Suwon-si, Gyeonggi-do 16677 (KR)**

(74) Representative: **Appleyard Lees IP LLP
15 Clare Road
Halifax HX1 2HY (GB)**

(54) **METHOD AND ELECTRONIC DEVICE FOR IDENTIFYING INPUT MOTION**

(57)    An electronic device according to an embodiment of the present disclosure may identify whether a first touch input to a touch display corresponds to a valid input of an input motion based on touch data related to the touch display and a first algorithm. When the first touch input corresponds to a valid input, the electronic device may identify, based on touch data and a second algorithm, inference result information related to the input motion for the first touch input. The electronic device may identify whether the first touch input and at least one second touch input correspond to the input motion based on the inference result information related to the input motion for the first touch input and inference result information related to the input motion for the at least one second touch input. A method of identifying an input motion of the electronic device may also be performed by using an artificial intelligence model.

FIG. 2

## Description

## Technical Field

The present disclosure relates to a method and electronic device for identifying an input motion according to an embodiment.

## Background Art

An electronic device identifies a user input motion (e.g., a swipe motion) as a touch movement distance variation within a plane coordinate system. In this case, the electronic device identifies as a swipe motion not only a swipe motion by the edge-of-hand of a user but also a swipe motion by two or more touch points of the user. Therefore, there is a problem that an electronic device cannot distinguish between different input motions of the user.

When two or more touch points of the user come into contact with a touch display of the electronic device with a time difference, the electronic device determines a representative coordinate value (e.g., a touch by the little finger of the user, or a median value of coordinate values). There is a problem that when a representative coordinate for determining a movement distance variation disappears while a swipe motion is performed, the electronic device cannot identify the corresponding motion of the user as a swipe motion.

Therefore, there is a need for a method for an electronic device to identify an input motion more accurately than a coordinate-based recognition method.

## Disclosure of Invention

## Solution to Problem

According to an embodiment of the present disclosure, a method of identifying an input motion may be provided. An electronic device may identify, based on touch data related to a touch display and a first algorithm, whether a first touch input to the touch display corresponds to a valid input of an input motion. When the first touch input corresponds to the valid input, the electronic device may identify, based on touch data and a second algorithm, inference result information related to the input motion for the first touch input. The electronic device may identify, based on the inference result information related to the input motion for the first touch input and inference result information related to the input motion for at least one second touch input, whether the first touch input and the at least one second touch input correspond to the input motion.

## Brief Description of Drawings

FIG. 1 is a diagram for explaining a method of identifying an input motion of an electronic device according to an embodiment.

FIG. 2 is a flowchart of a method of identifying an input motion by an electronic device according to an embodiment.

FIG. 3 is a diagram for explaining touch data according to an embodiment.

FIG. 4A is a diagram for explaining a method of obtaining a touch area by an electronic device according to an embodiment.

FIG. 4B is a diagram for explaining a method of identifying a length of a touch area by an electronic device according to an embodiment.

FIG. 4C is a diagram for explaining a method of identifying a valid input based on a first algorithm by an electronic device according to an embodiment.

FIG. 5 is a diagram for explaining an operating method of an electronic device based on a second algorithm according to an embodiment.

FIG. 6 is a diagram for explaining a method of identifying inference result information for a plurality of touch inputs based on a second algorithm by an electronic device according to an embodiment.

FIG. 7 is a diagram for explaining inference result information and a queue in which the inference result information is stored according to an embodiment.

FIG. 8 is a diagram for explaining a method of determining an input motion based on a plurality of pieces of inference result information by an electronic device according to an embodiment.

FIG. 9A is a diagram for explaining an operating method of an electronic device based on a first algorithm and a second algorithm according to an embodiment.

FIG. 9B is a diagram for explaining a method of performing an event corresponding to an input motion by an electronic device according to an embodiment.

FIG. 10 shows an example of a block diagram of an electronic device according to an embodiment.

## Mode for the Invention

In the present disclosure, the expression "at least one of a, b or c" may refer to "a", "b", "c", "a and b", "a and c", "b and c", "all of a, b and c", or variations thereof.

The terms used in the present disclosure are selected from the most widely used general terms possible while considering the functions of the present disclosure, but may vary depending on the intention of engineers in the field, precedents, the emergence of new technologies, and the like. In certain cases, there are terms arbitrarily selected by the applicant, and in such cases, their meanings are described in detail in the corresponding description. Therefore, the terms used in the present disclosure need to be defined based on the meaning of the terms and the overall content of the present disclosure, rather than simply the names of the terms.

The singular expressions include the plural expressions unless clearly specified otherwise in context. Terms used herein, including technical or scientific terms, may have the same meaning as commonly understood by those of skill in the art described herein. Although the terms 'first' or 'second' may be used in the specification to describe various elements, these elements should not be limited by these terms. The terms are used only for the purpose of distinguishing one constituent element from another constituent element.

Throughout the specification, unless explicitly described to the contrary, the word "comprise (include)" and variations such as "comprises (includes)" or "comprising (including)", will be understood to imply the inclusion of stated elements but not the exclusion of any other elements. The terms such as "... unit" or "module" disclosed in the specification mean units for processing at least one function or operation, which may be implemented by hardware, software, or a combination thereof.

A function related to artificial intelligence (AI) according to the present disclosure may be operated through a processor and memory. The processor may include one or more processors. In this case, the one or more processors may be a general-purpose processor such as a central processing unit (CPU), an application processor (AP), or a digital signal processor (DSP), a graphics-only processor such as a graphics-processing unit (GPU) or a vision processing unit (VPU), or an artificial intelligence-specific processor such as a neural processing unit (NPU). The one or more processors are controlled to process input data according to a predefined operation rule or AI model stored in memory. Alternatively, when the one or more processors are AI-specific processors, the AI-specific processors may be designed with a hardware structure specialized for processing a particular AI model.

The predefined operation rule or AI model may be made through learning. Here, being made through learning means that a basic AI model is learned by using a large amount of learning data, based on a learning algorithm, thereby making a predefined operation rule or AI model set to perform a desired characteristic (or purpose). Such learning may be performed on a device itself on which AI according to the present disclosure is performed, or may be performed through a separate server and/or system. Examples of learning algorithms include, but are not limited to, supervised learning, unsupervised learning, semi-supervised learning, or reinforcement learning.

An AI model may include a plurality of neural network layers. The plurality of neural network layers may have a plurality of weight values, respectively, and perform a neural network operation through an operation between the operation result of a previous layer and the plurality of weight values. The plurality of weight values of the plurality of neural network layers may be optimized according to the learning result of the AI model. For example, the plurality of weight values may be updated such that a loss value or cost value obtained from the AI model is reduced or minimized during a learning procedure. An artificial neural network may include a deep neural network (DNN), for example, a convolutional neural network (CNN), a deep neural network (DNN), a recurrent neural network (RNN), a restricted Boltzmann machine (RBM), a deep belief network (DBN), a bidirectional recurrent deep neural network (BRDNN), or deep Q-networks, but is not limited to the examples described above.

The term "user" in the embodiment of this specification means a person who controls a system, function or operation, and may include a developer, an administrator or an installer.

Hereinafter, embodiments of the present disclosure are described in detail with reference to the attached drawings such that those of skill in the art to which the present disclosure pertains may easily implement the present disclosure. However, the present disclosure may be implemented in many different forms and is not limited to the embodiments described herein. To clearly explain the present disclosure in the drawings, portions that are not related to the explanation are omitted, and similar portions are given similar drawing reference numerals throughout the specification.

The present disclosure will be described in detail with reference to the attached drawings below.

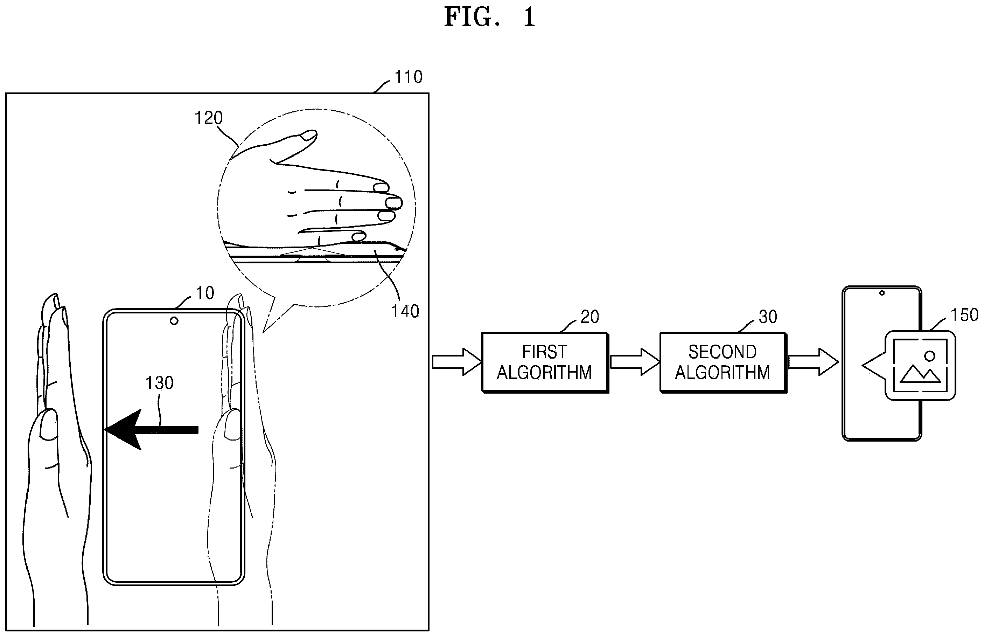

FIG. 1 is a diagram for explaining a method of identifying an input motion of an electronic device according to an embodiment.

An electronic device 10 according to an embodiment may identify whether at least one touch input corresponds to an input motion 110. The electronic device 10 may generate an event 150 corresponding to the input motion when the at least one touch input corresponds to the input motion 110.

In the present disclosure, the input motion 110 may mean consecutive movement 130 of a touch input 120 in which a certain area or more comes into contact with a touch display 140. In the input motion 110, the position of the touch input 120 may be changed from a first position to a second position on the touch display 140. For example, the certain area may be an area having a size for identifying a touch input on the touch display 140. For example, a distance between the first position and the second position may be a distance sufficient to identify the input motion 110, and the first position and the second position may be different from each other.

For example, the input motion 110 may mean, but is not limited to, rubbing, sliding, or shaking the edge-of-hand of the user on the touch display 140 of the electronic device 10. The input motion 110 may be referred to as a swipe input motion, a sliding input motion, or the like, but is not limited thereto.

In the present disclosure, the touch input 120 may include at least one of a first touch input or at least one second touch input. The touch input 120 for the input motion 110 may be a consecutive input or a set of plurality of inputs. For example, the electronic device 10 may separately obtain the touch input 120 as a plurality of touch inputs based on a frequency of the touch display 140. For example, the electronic device 10 may obtain a consecutive touch input 120 as a plurality of touch inputs based on a preset cycle.

In the present disclosure, a valid input of the input motion may mean a reference unit for identifying the input motion 110 or an input that satisfies a condition. For example, the valid input of the input motion may mean an input having a size larger than or equal to a certain area on the touch display 140. As a non-limiting example, the valid input of the input motion may mean that the touch input 120 is identified as the edge-of-hand of the user, and when identifying the touch input 120 as an input having a size greater than or equal to a certain area based on a first algorithm and touch data related to the touch display 140, the electronic device 10 may identify that a precondition for operating a second algorithm is satisfied.

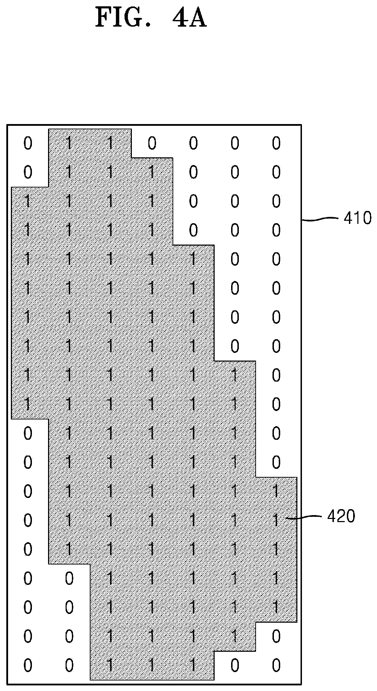

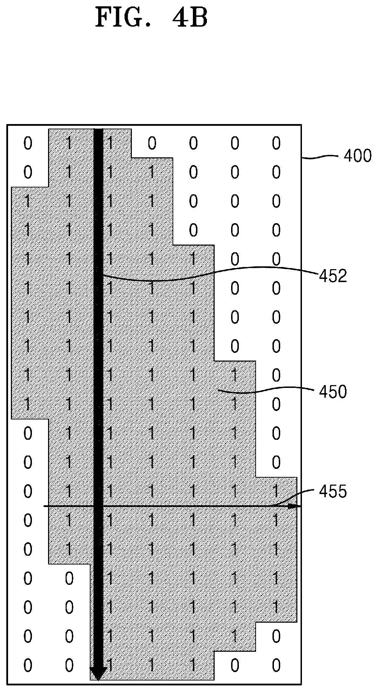

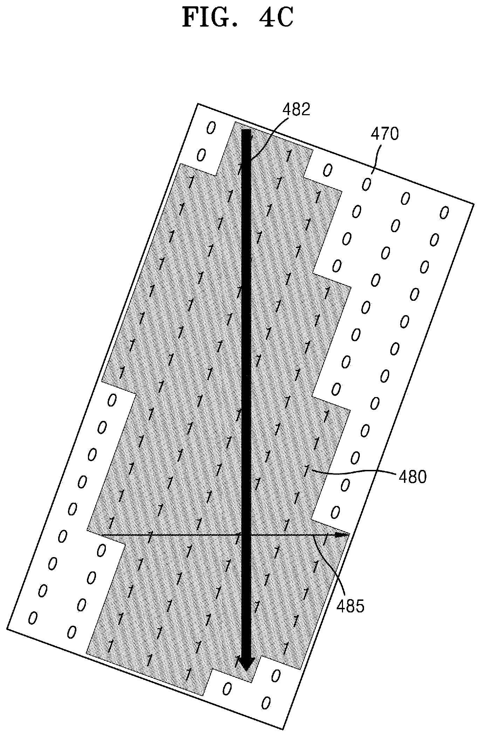

The electronic device 10 according to an embodiment may identify the touch input 120 based on a first algorithm 20. In the present disclosure, the first algorithm 20 may mean an algorithm for identifying whether a touch input received on the touch display 140 corresponds to a valid input for an input motion. For example, the electronic device 10 may identify whether the touch input received on the touch display 140 corresponds the edge-of-hand of the user or a state in which the finger of the user simply touches the touch display by using the first algorithm 20. The first algorithm 20 may be referred to as an algorithm for recognizing the edge-of-hand, but is not limited to the corresponding term. The first algorithm 20 is described in more detail below with reference to FIGS. 4A, 4B, and 4C.

The electronic device 10 according to an embodiment may identify whether the touch input 120 is one touch input constituting the input motion 110 based on a second algorithm 30. In the present disclosure, the second algorithm 30 may mean an algorithm for identify whether a certain touch input 120 from among consecutive touch inputs received on the touch display 140 may correspond to the input motion 110 and outputting inference result information related to the input motion, which is an inferred result value. For example, the electronic device 10 may identify whether the touch input 120 received on the touch display 140 is one touch input constituting a swipe input motion and determine inference result information related to the input motion by using the second algorithm 30.

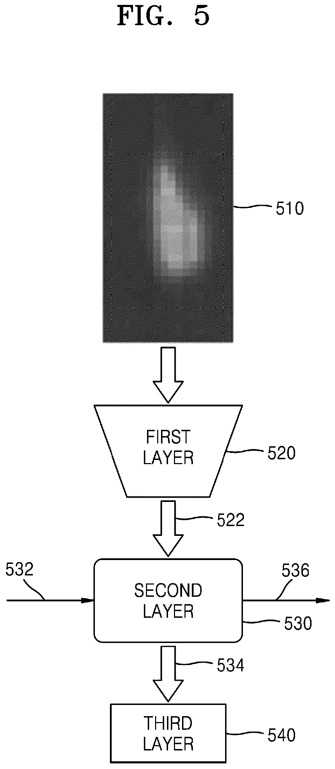

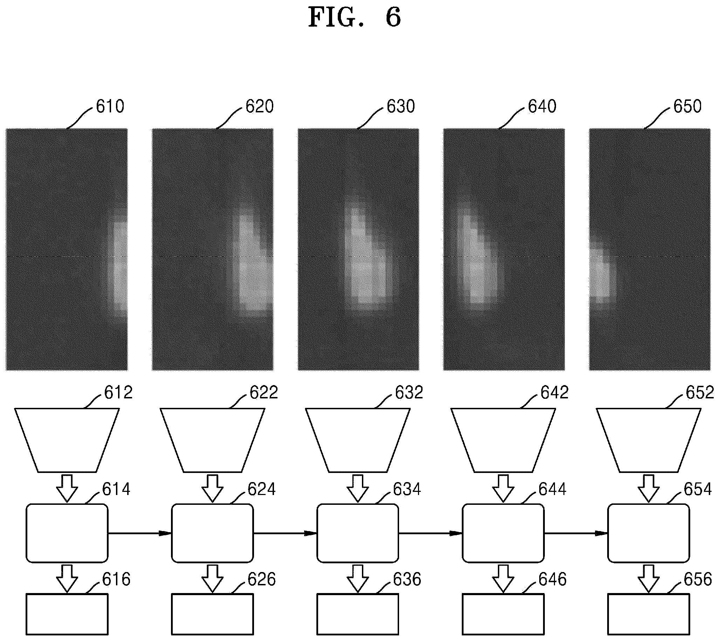

For example, the second algorithm 30 may be referred to as a model for inferring a palm swipe, a model for recognizing a swipe motion, or the like, but is not limited to the corresponding terms. The second algorithm 30 may include at least one layer. The second algorithm 30 is described in more detail below with reference to FIGS. 5 and 6.

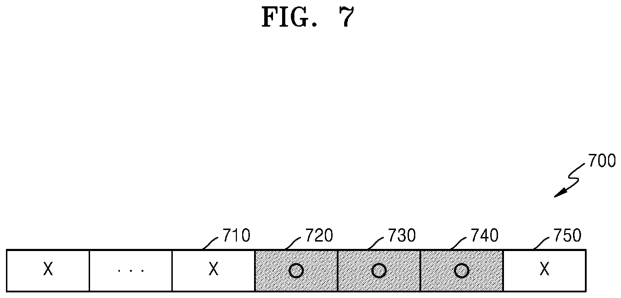

In the present disclosure, the inference result information may mean result information obtained using an inference model as to whether a specified touch input 120 is a touch input constituting the input motion 110. The inference result information is described in more detail below with reference to FIG. 7.

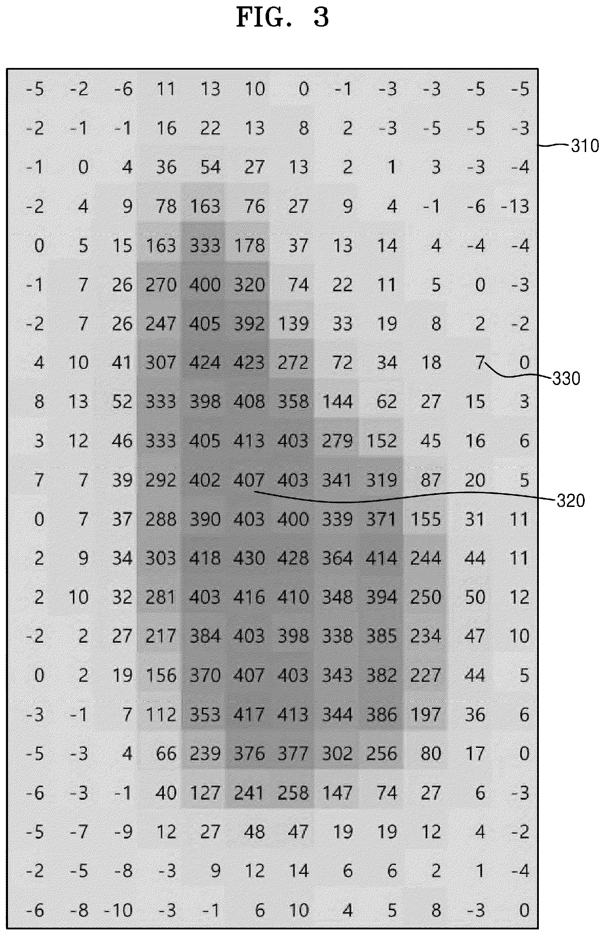

In the present disclosure, touch data may mean input information for the first algorithm and the second algorithm. A more detailed description of the touch data is given below with reference to FIG. 3.

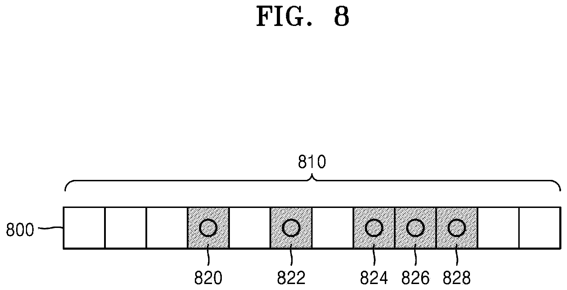

The electronic device 10 according to an embodiment may identify whether consecutive touch inputs received on the touch display 140 correspond to the input motion 110. The electronic device 10 may identify whether a plurality of touch inputs may correspond to the input motion 110 based on inference result information related to the input motion for each of the plurality of touch inputs. An identifying method related to this is described in more detail below with reference to FIG. 8.

When a plurality of touch inputs according to an embodiment are identified as corresponding to the input motion 110, the electronic device 10 may generate the event 150 corresponding to the input motion. In the present disclosure, the event 150 corresponding to an input motion may mean an event performed when an input received by the electronic device 10 is identified as an input motion. The event 150 may mean a preset process. As a non-limiting example, the event 150 may mean a screen capturing (or obtaining) process, or a screen capturing (or obtaining) event.

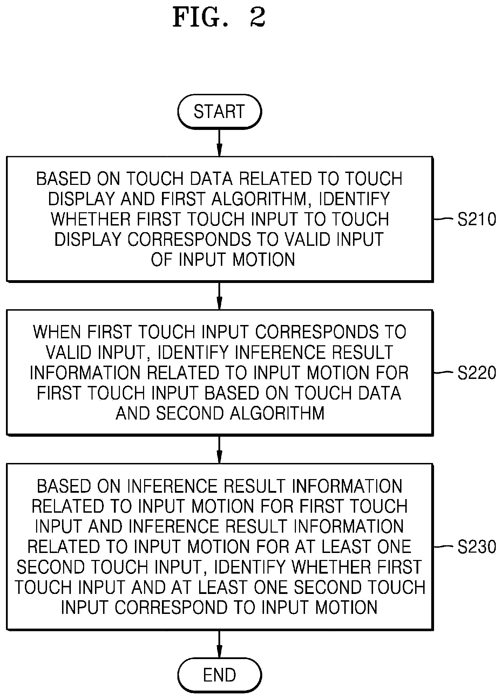

FIG. 2 is a flowchart of a method of identifying an input motion by an electronic device according to an embodiment.

In operation S210, the electronic device 10 may identify whether a first touch input to a touch display corresponds to a valid input of an input motion based on touch data related to the touch display and the first algorithm 20.

The electronic device 10 according to an embodiment may obtain the first touch input on the touch display 140. For example, the touch data may correspond to electrostatic capacitance data of the touch display 140 to which the first touch input is input.

The electronic device 10 according to an embodiment may identify a touch area corresponding to the first touch input based on touch data. For example, when a length of the touch area is greater than a preset length threshold, the electronic device 10 may identify the first touch input as corresponding to a valid input.

In operation S220, when the first touch input corresponds to a valid input, the electronic device 10 may identify inference result information related to the input motion for the first touch input based on the touch data and the second algorithm 30.

The second algorithm according to an embodiment may include at least one of a first layer related to feature extraction, a second layer related to a temporal feature, or a third layer related to feature classification.

The inference result information related to an input motion for a first touch input according to an embodiment may correspond to information on a possibility that the first touch input corresponds to the input motion, or information indicating whether the first touch input corresponds to the input motion.

The electronic device 10 according to an embodiment may store inference result information related to an input motion for the first touch input in a queue in which inference result information related to an input motion for at least one second touch input is stored in the order of touch inputs.

In operation S230, the electronic device 10 may identify whether the first touch input and the at least one second touch input correspond to the input motion 110 based on the inference result information related to the input motion for the first touch input and the inference result information related to the input motion for the at least one second touch input.

The inference result information related to the input motion for the at least one second touch input according to an embodiment may be identified based on other touch data for the touch display 140 and the second algorithm.

The at least one second touch input according to an embodiment may correspond to a valid input of an input motion. The at least one second touch input may be identified based on the first algorithm and the other touch data.

The electronic device 10 according to an embodiment may identify, from among the inference result information related to the input motion for the first touch input and the inference result information related to the input motion for the at least one second touch input, inference result information indicating that a touch input corresponds to the input motion 110.

When the number of inference result information that is consecutive and indicates that a touch input corresponds to the input motion 110 is greater than a first set value, the electronic device 10 according to an embodiment may identify that the first touch input and the at least one second touch input correspond to the input motion 110. For example, the inference result information indicating that the touch input corresponds to the input motion 110 may be at least one piece of information consecutive in the order of the touch inputs. For example, the first set value may mean a reference number of consecutive inference result information.

According to an embodiment, when the number of the inference result information related to the input motion for the first touch input and the inference result information related to input motion for the at least one second touch input is less than a second set value, the first set value may correspond to a first value. For example, the second set value may mean a reference number of preset inference result information.

According to an embodiment, when the number of the inference result information related to the input motion for the first touch input and the inference result information related to input motion for the at least one second touch input is greater than or equal to the second set value, the first set value may correspond to a second value.

According to an embodiment, the first value may be a value less than the second value.

The electronic device 10 according to an embodiment may perform the event 150 corresponding to the input motion 110 when the first touch input and the at least one second touch input correspond to the input motion 110. For example, the event 150 may correspond to a process of obtaining (e.g., capturing) an image displayed on the touch display 140.

The operations described above with reference to FIG. 2 may be added or omitted.

The electronic device 10 according to an embodiment may identify an input motion by using unprocessed data (i.e., raw data) before processing, and thus a probability of false positive may be reduced. In FIG. 3, touch data, which represents input information for the first algorithm and the second algorithm, is described in more detail.

FIG. 3 is a diagram for explaining touch data according to an embodiment.

Touch data 310 according to an embodiment may mean unprocessed data (i.e., raw data), and when the touch display 140 is a capacitive touch display, the touch data 310 may include information on electrostatic quantity, electrostatic data, and data on electrostatic capacitance. For example, the touch data 310 may mean electrostatic raw data.

The touch data 310 may include an area 320 corresponding to a touch input and an outer area 330 excluding the touch input. As seen from FIG. 3, the electrostatic quantity for the area 320 corresponding to the touch input is greater than the electrostatic quantity for the outer area 330.

The electronic device 10 according to an embodiment may obtain the touch data 310 corresponding to the touch display 140 when a touch input is received on the touch display 140.

For example, the touch data 310 may be obtained based on a preset cycle. The touch data 310 may be obtained based on frequency information of an electrostatic touch display 1030. For example, when frequency information of the electrostatic touch display 140 is 90 Hz and the input motion 110 of the user occurs for 1 second, the electronic device 10 may obtain 90 frames for the corresponding input motion 110. The electronic device 10 may obtain the touch data 310 corresponding to each of the 90 frames, but is not limited to the example described above.

The electronic device 10 according to an embodiment may perform the first algorithm 20 to filter input touch data of the second algorithm 30. Accordingly, the electronic device 10 may operate the second algorithm 30 when identifying whether the touch input is a valid input (e.g., the edge-of-hand of the user) based on the first algorithm 20. An operating method of the electronic device 10 based on the first algorithm 20 is described in more detail with reference to the diagrams below.

FIG. 4A is a diagram for explaining a method of obtaining a touch area by an electronic device according to an embodiment.

The electronic device 10 according to an embodiment may perform Max value clipping on the touch data 310. The electronic device 10 may perform the Max value clipping to remove a noise value included in the touch data 310 that is raw data. The electronic device 10 may prevent an inappropriate result from being derived due to a large difference between the minimum and maximum values.

The electronic device 10 according to an embodiment may perform Z-score standardization on a value obtained by performing the Max value clipping, based on Equation 1 below. After calculating the standardization, the electronic device 10 may clip the data to change the clipped data to data with a value between -z-score and +z-score. The electronic device 10 may obtain meaningful data by removing values that are excessively low or excessively high.

[Equation 1]

$$Z = \frac{x - \mu}{\sigma}$$

In Equation 1, $\mu$ may refer to the mean, and $\sigma$ may refer to a standard deviation.

The electronic device 10 according to an embodiment may perform normalization on standardized data. For example, the electronic device 10 may perform Min-max normalization on data processed using the method described above, based on Equation 2.

[Equation 2]

$$X = \frac{x - x_{min}}{x_{max} - x_{min}}$$

The electronic device 10 may change data to a value between a standardized minimum value and a maximum value. For example, the electronic device 10 may use a value called lower max to respond to data that is distributed only with very low values. In this case, the maximum value may be a standardized maximum value or a lower max value (i.e., max (standardized max, lower max), a larger value between the standardized max and the lower max or a value where the standardized max is equal to the lower max), and the electronic device 10 may change the data to a value between the standardized minimum value and the standardized maximum value or the lower max value. (That is, the value of the data is standardized min to max (standardized max, lower max), and thus the value of the data is a value between the standardized minimum value and the value that is the larger value between the standardized max and the lower max or the value where the standardized max is equal to the lower max) For example, as seen from FIG. 3, some values of electrostatic quantities contained in the outer area 330 may be misrecognized as values of the electrostatic quantities for the area 320 corresponding to the touch input. To remove the electrostatic quantities having the values that are to be misrecognized as values of the area 320 corresponding to the touch input, the electronic device 10 may use two maximum values. For example, the maximum value may include different values of m1 and m2.

The electronic device 10 according to an embodiment may perform binarized processing on a data value that is changed to a value between the standardized minimum value and the maximum value. The electronic device 10 according to an embodiment may change the corresponding value to 1 when the corresponding value is greater than or equal to a certain threshold, and the electronic device 10 may change the corresponding value to 0 when the corresponding value is less than a certain value. The certain threshold may be a preset value, for example 0.5, but may be changed based on the operating performance of the electronic device 10.

The electronic device 10 according to an embodiment may obtain a binarized data frame 410 including 1 and 0. The electronic device 10 may determine an area changed to 1 as an area of the touch display 140, to which a touch input is input, and may determine an area changed to 0 as an area of the touch display 140, to which a touch input is not input.

The electronic device 10 according to an embodiment may identify at least one touch area 420 that satisfies a certain condition in the binarized data frame 410. For example, the electronic device 10 may extract all touch areas 420 having a length greater than or equal to a length threshold from the binarized data frame 410. The electronic device 10 may sort the at least one extracted touch area 420 in descending order of length.

FIG. 4B is a diagram for explaining a method of identifying a length of a touch area by an electronic device according to an embodiment.

The electronic device 10 may identify at least one length for a touch area 450 included in a first binarized data frame 440. FIG. 4B is a diagram for explaining a situation in which the electronic device 10 identifies one touch area 450, and the number of touch areas 450 is not limited to the number illustrated. Referring to FIG. 4B, the electronic device 10 may determine a first length 452 and a second length 455. For example, at least one length for the touch area 450 may include at least one of a horizontal length of the touch area 450 or a vertical length of the touch area 450, but is not limited to the example described above.

The electronic device 10 according to an embodiment may identify the longest length for the touch area 450 while rotating the binarized data frame 410 including at least one extracted touch area by a certain angle. For example, the electronic device 10 may obtain the first binarized data frame 440 rotated by an angle D1 based on the vertical axis. The electronic device 10 may identify the longest length for the touch area 450 included in the first binarized data frame 440. The longest length for the touch area 450 included in the first binarized data frame 440 may be identified as the first length 452. The angle D1 according to an embodiment may be an arbitrary value between 0 and 360 degrees and may include 0 degrees.

The electronic device 10 according to an embodiment may obtain a second binarized data frame 470 rotated by an angle D2 based on the vertical axis. The angle D1 according to an embodiment may be an arbitrary value between 0 and 360 degrees. A description related to this is given with reference to FIG. 4C.

FIG. 4C is a diagram for explaining a method of identifying a valid input based on a first algorithm by an electronic device according to an embodiment.

The electronic device 10 may determine a third length 482 and a fourth length 485 for a touch area 480 included in the second binarized data frame 470. The electronic device 10 may identify the longest length for the touch area 480 included in the second binarized data frame 470. The longest length for the touch area 480 included in the second binarized data frame 470 may be identified as the third length 482.

In an embodiment, the electronic device 10 may obtain a plurality of rotated binarized data frames. In an embodiment, the electronic device 10 may obtain a plurality of binarized data frames rotated based on the vertical axis by a plurality of arbitrary rotation angles. Each of the plurality of arbitrary rotation angles may correspond to a value between 0 and 360 degrees, may be a preset value, and may be a value that changes depending on the performance of the electronic device 10. In an embodiment, the electronic device 10 may obtain a next binarized data frame by rotating the binarized data frame by an arbitrary difference angle relative to a previous binarized data frame. For example, a difference angle between the previous binarized data frame and the next binarized data frame may be a single value. For example, the difference angle may have a plurality of values. For example, the difference angle may be set by repeating a plurality of preset values.

The electronic device 10 may obtain a plurality of rotated binarized data frames and identify the longest length for the touch area included in the rotated binarized data frames. Referring to FIGS. 4B and 4C, the electronic device 10 may identify the longest length for the touch area 450 included in the first binarized data frame 440 as the first length 452, and may identify the longest length for the touch area 480 included in the second binarized data frame 470 as the third length 482. The longest length among these may be the first length 452, and the electronic device 10 may determine the first length 452 as the longest length for the touch area 450.

The electronic device 10 may compare the first length 452, which is the length of the touch area 450, with a length threshold. The electronic device 10 may identify a touch input as corresponding to a valid input when the length of the touch area 450 is greater than a preset length threshold. Through an operation in which the electronic device 10 obtains a plurality of rotated binarized data frames and identifies the longest length for each of the binarized data frames, the electronic device 10 may obtain a stable result as to whether a user touch input received at various angles with respect to the touch display 140 of the electronic device 10 corresponds to a valid input.

The electronic device 10 may identify inference result information related to an input motion for a touch input by using the second algorithm, which is a deep learning algorithm, and a more detailed description of the second algorithm is given below.

FIG. 5 is a diagram for explaining an operating method of an electronic device based on a second algorithm according to an embodiment.

The electronic device 10 according to an embodiment may input touch data 510 and extract at least one feature 522 through a first layer 520. For example, the electronic device 10 may obtain a feature map based on the touch data 510 and the first layer 520. The first layer 520 may include any type of layer capable of extracting features for data. For example, the first layer 520 may include a layer capable of extracting a feature for image data or video data generated in an image frame format, such as the touch data 510.

As a non-limiting example, the first layer 520 may be a convolutional neural network (CNN) layer, and the electronic device 10 may extract a feature of the touch data 510 generated in the form of an image frame by using the CNN layer.

The electronic device 10 according to an embodiment may input at least one feature 522 extracted through the first layer 520 or at least one of result-related information 532 of the second layer for previous touch data and may identify at least one feature 534 related to a temporal order of the touch data 510 through a second layer 530. The second layer 530 may include all types of layers capable of resolving and predicting problems by extracting features from ordered sequence data. For example, the second layer 530 may include at least one of a recurrent neural network (RNN) layer or a long short-term memory (LSTM) layer.

For example, result-related information 536 of the second layer for the touch data 510 may be used as input information for next touch data. The result-related information 536 of the second layer for the touch data 510 may be information generated based on the at least one feature 534 related to a temporal order, or may be the same information as the at least one feature 534 related to a temporal order.

As a non-limiting example, the second layer 530 may be an LSTM layer, and the electronic device 10 may extract the at least one feature 534 related to the temporal order of the touch data 510 by using the LSTM layer based on the at least one feature 522 extracted through the first layer 520 and the result-related information 532 of the second layer for previous touch data.

The electronic device 10 according to an embodiment may classify and predict the at least one feature 534 related to the temporal order extracted through the second layer 530 based on a third layer 540. The third layer 540 may include any type of layer capable of classifying or predicting features of data.

For example, the electronic device 10 may obtain information about a probability that a touch input corresponds to an input motion, or information indicating whether a touch input corresponds to an input motion, based on the third layer 540. For example, when the information indicating whether the touch input corresponds to the input motion is 1, the electronic device 10 may identify that the touch input corresponds to the input motion, and when the information indicating whether the touch input corresponds to the input motion is 0, the electronic device 10 may identify that the touch input does not correspond to the input motion.

As a non-limiting example, the third layer 540 may be a fully connected (FC) layer, and the electronic device 10 may classify the features of the touch data 510 by using the FC layer with respect to the at least one feature 534 related to the temporal order of the extracted touch data 510.

FIG. 6 is a diagram for explaining a method of identifying inference result information for a plurality of touch inputs based on a second algorithm by an electronic device according to an embodiment.

The electronic device 10 according to an embodiment may receive a plurality of temporally consecutive touch data 610, 620, 630, 640, and 650.

In an embodiment, the touch data may be data that is identified as not corresponding to a valid touch input based on the first algorithm 20. The electronic device 10 may not perform the second algorithm 30.

In an embodiment, first touch data 610, second touch data 620, third touch data 630, fourth touch data 640, and fifth touch data 650 may be data identified as corresponding to a valid touch input based on the first algorithm 20.

In an embodiment, the electronic device 10 may perform the second algorithm 30 based on the first touch data 610. For example, the electronic device 10 may use the first touch data 610 as input information for the second algorithm 30. The electronic device 10 may obtain inference result information for the first touch data 610 based on at least one of a first layer 612, a second layer 614, or a third layer 616. For example, the inference result information for the first touch data 610 may be information indicating that touch input does not correspond to an input motion. In this case, the first touch data 610 may correspond to a frame at time t.

In an embodiment, the electronic device 10 may perform the second algorithm 30 based on the second touch data 620. For example, the electronic device 10 may use the second touch data 620 as input information for the second algorithm 30. The electronic device 10 may obtain inference result information for the second touch data 620 based on at least one of a first layer 622, a second layer 624, or a third layer 626. For example, the inference result information for the second touch data 620 may be information indicating that touch input corresponds to an input motion. The second touch data 620 may correspond to a frame at time t+1.

In an embodiment, the electronic device 10 may perform the second algorithm 30 based on the third touch data 630. For example, the electronic device 10 may use the third touch data 630 as input information for the second algorithm 30. The electronic device 10 may obtain inference result information for the third touch data 630 based on at least one of a first layer 632, a second layer 634, or a third layer 636. For example, the inference result information for the third touch data 630 may be information indicating that touch input corresponds to an input motion. The third touch data 630 may correspond to a frame at time t+2.

In an embodiment, the electronic device 10 may perform the second algorithm 30 based on the fourth touch data 640. For example, the electronic device 10 may use the fourth touch data 640 as input information for the second algorithm 30. The electronic device 10 may obtain inference result information for the fourth touch data 640 based on at least one of a first layer 642, a second layer 644, or a third layer 646. For example, the inference result information for the fourth touch data 640 may be information indicating that touch input corresponds to an input motion. The fourth touch data 640 may correspond to a frame at time t+3.

In an embodiment, the electronic device 10 may perform the second algorithm 30 based on the fifth touch data 650. For example, the electronic device 10 may use the fifth touch data 650 as input information for the second algorithm 30. The electronic device 10 may obtain inference result information for the fifth touch data 650 based on at least one of a first layer 652, a second layer 654, or a third layer 656. For example, the inference result information for the fifth touch data 650 may be information indicating that touch input does not correspond to an input motion. In this case, the fifth touch data 650 may correspond to a frame at time t+4.

In an embodiment, touch data for the first touch input and touch data for at least one second touch input may include at least one of the first touch data 610, the second touch data 620, the third touch data 630, the fourth touch data 640, or the fifth touch data 650. As a non-limiting example, touch data for a first touch input may mean the first touch input, and touch data for at least one second touch input may mean at least one of the first touch data 610, the second touch data 620, the third touch data 630, or the fourth touch data 640.

FIG. 7 is a diagram for explaining inference result information and a queue in which the inference result information is stored according to an embodiment.

The electronic device 10 according to an embodiment may identify a queue 700 in which inference result information for a plurality of temporally consecutive touch data 610, 620, 630, 640, and 650 is stored.

In an embodiment, the touch data may be data that is identified as not corresponding to a valid touch input based on the first algorithm 20, and the inference result information may not be obtained.

In an embodiment, first inference result information 710 may be inference result information for the first touch data 610 and may be information indicating that the touch input does not correspond to an input motion. Second inference result information 720 may be inference result information for the second touch data 620 and may be information indicating that the touch input corresponds to an input motion. Third inference result information 730 may be inference result information for the third touch data 630 and may be information indicating that the touch input corresponds to an input motion. Fourth inference result information 740 may be inference result information for the fourth touch data 640 and may be information indicating that the touch input corresponds to an input motion. Fifth inference result information 750 may be inference result information for the fifth touch data 650 and may be information indicating that the touch input does not correspond to an input motion.

In an embodiment, the inference result information may correspond to a probability value that the corresponding touch input corresponds to the input motion 110. For example, the electronic device 10 may obtain a probability value that the corresponding touch input corresponds to the input motion 110 as a result value of the second algorithm 30 (i.e., result information of the third layer 540). For example, the probability that the touch input corresponds to the input motion 110 may be 70 %. The electronic device 10 may store in a queue the probability value that the corresponding touch input corresponds to the input motion 110.

The inference result information according to an embodiment may correspond to information indicating whether the corresponding touch input corresponds to the input motion 110. For example, the electronic device 10 may obtain information indicating whether a touch input corresponds to an input motion as a result value of the second algorithm 30 (i.e., result information of the third layer 540). For example, when the information indicating whether the touch input corresponds to the input motion is 1, the electronic device 10 may identify that the touch input corresponds to the input motion, and when the information indicating whether the touch input corresponds to the input motion is 0, the electronic device 10 may identify that the touch input does not correspond to the input motion. The electronic device 10 may store information in a queue indicating whether the touch input corresponds to the input motion 110.

The inference result information according to an embodiment may correspond to information indicating whether the corresponding touch input corresponds to the input motion 110. For example, the electronic device 10 may obtain a probability value that the corresponding touch input corresponds to the input motion 110 as a result value of the second algorithm 30 (i.e., result information of the third layer 540). When the probability value that the corresponding touch input corresponds to the input motion 110 is greater than or equal to a preset probability value, the electronic device 10 may identify the touch input as corresponding to the input motion, and when the probability value that the corresponding touch input corresponds to the input motion 110 is less than the preset probability value, the electronic device 10 may identify the touch input as corresponding to the input motion. The preset probability value may mean an arbitrary value and may vary depending on the system environment, the performance of the electronic device 10, and the like. The electronic device 10 may store identified indication information in a queue based on the probability value that the corresponding touch input corresponds to the input motion 110.

FIG. 8 is a diagram for explaining a method of determining an input motion based on a plurality of pieces of inference result information by an electronic device according to an embodiment.

In an embodiment, a queue size 810 may be a size for including inference result information for a plurality of temporally consecutive touch data obtained by the electronic device 10.

In an embodiment, the queue size 810 may be a size for including inference result information of some of a plurality of temporally consecutive touch data obtained by the electronic device 10. A queue 800 may store a preset number of inference result information. For example, the queue 800 may store a preset number of latest inference result information. Here, the preset number of inference result information may mean the number of inference result information that allows the electronic device 10 to finally identify whether a plurality of touch inputs correspond to the input motion 110, and may be a value that is changeable depending on the memory performance of the electronic device 10, and the like. As a non-limiting example, referring to FIG. 8, the queue size 810 may be 12.

In an embodiment, the electronic device 10 may identify, from among the inference result information related to input motions for a plurality of touch inputs, inference result information indicating that the touch input corresponds to the input motion 110. For example, the electronic device 10 may identify at least one piece of inference result information 820, 822, 824, 826, and 828 indicating that a touch input corresponds to the input motion 110 from the queue 800 in which inference result information related to input motions for a plurality of touch inputs is stored.

In an embodiment, the electronic device 10 may identify at least one piece of inference result information 824, 826, and 828 that indicate that the touch input corresponds to an input motion and are consecutive in the order of touch inputs.

In an embodiment, the electronic device 10 may identify at least one piece of inference result information 824, 826, and 828 that indicate that a probability value that the corresponding touch input corresponds to the input motion 110 is greater than or equal to a preset probability value and are consecutive in the order to touch inputs.

In an embodiment, the electronic device 10 may identify the number of the inference result information 824, 826, and 828 that is consecutive and indicates that a touch input corresponds to the input motion 110. Referring to FIG. 8, the number of the inference result information 824, 826, and 828 that is consecutive and indicates that a touch input corresponds to the input motion 110 is 3.

In an embodiment, the electronic device 10 may identify whether the number of the inference result information 824, 826, and 828 that are consecutive and indicate that a touch input corresponds to the input motion 110 is greater than a first set value.

In an embodiment, the electronic device 10 may identify the first set value. The first set value may correspond to the first value or the second value, and the first value may be a value less than the second value. For example, the first set value may mean a reference number for consecutive inference result information, or a reference number for the number of a plurality of touch data. For example, the first value may include an integer greater than or equal to 1.

In an embodiment, when the queue size 810 in which a plurality of pieces of inference result information are stored is less than the second set value, the first set value may correspond to the first value. When the queue size 810 in which the plurality of pieces of inference result information are stored is greater than or equal to the second set value, the first set value may correspond to the second value.

In an embodiment, when the number of the plurality of pieces of inference result information obtained by the electronic device 10 is less than the second set value, the first set value may correspond to the first value. When the number of the plurality of pieces of inference result information obtained by the electronic device 10 is greater than or equal to the second set value, the first set value may correspond to the second value.

In an embodiment, when the number of a plurality of touch data obtained by the electronic device 10 is less than the second set value, the first set value may correspond to the first value. When the number of the plurality of touch data obtained by the electronic device 10 is greater than or equal to the second set value, the first set value may correspond to the second value. For example, the electronic device 10 may set the first set value by considering the number of frames from a moment at which a touch input is received on the touch display 140 (i.e., press state) to a moment at which the touch input is released (i.e., release state).

In an embodiment, the electronic device 10 may identify that a plurality of touch inputs correspond to the input motion 110 when the number of inference result information 824, 826, and 828 indicating that consecutive touch inputs correspond to the input motion 110 is greater than the first set value. As a non-limiting example, the first set value may be 2. The number of inference result information 824, 826, and 828 indicating that consecutive touch inputs correspond to the input motion 110 is 3 and the first set value is 2, and thus the electronic device 10 may identify that the plurality of touch inputs correspond to the input motion 110.

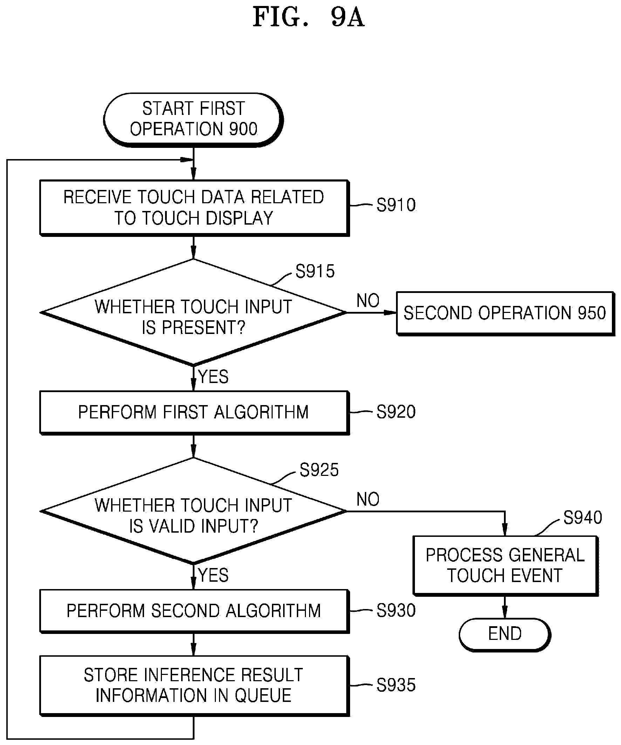

FIG. 9A is a diagram for explaining an operating method of an electronic device based on a first algorithm and a second algorithm according to an embodiment.

In an embodiment, the electronic device 10 may initiate an operation of a first operation 900, and the number of frames CNT inferred by the electronic device 10 may be 0.

In operation S910, the electronic device 10 may receive the touch data 310 related to the touch display 140. For example, the electronic device 10 may receive electrostatic touch frame information.

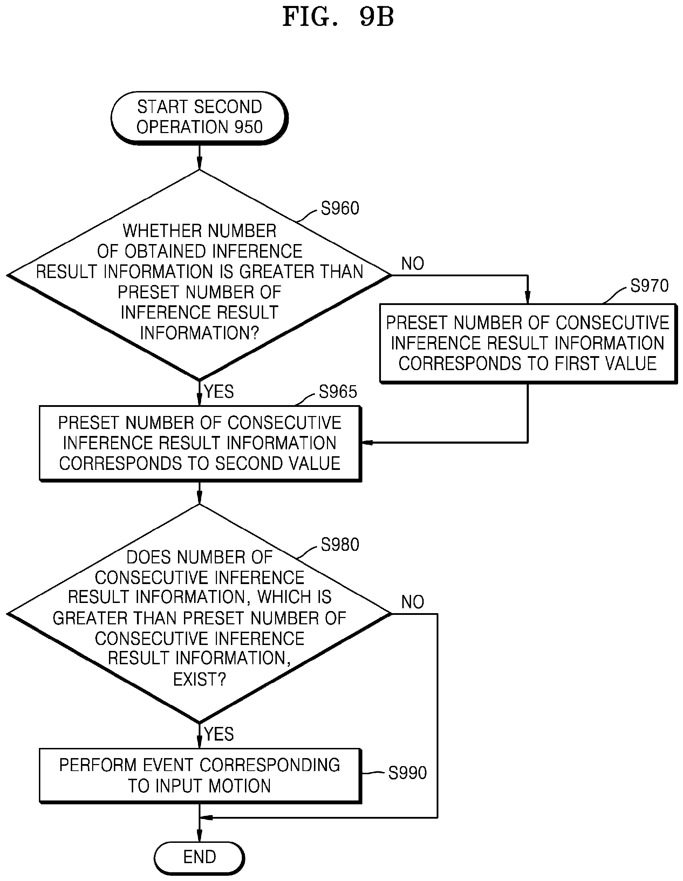

In operation S915, the electronic device 10 may identify whether a touch input is present. For example, the electronic device 10 may identify whether a current state is an input (e.g., press) state or a release (e.g., release) state. When the electronic device 10 determines that no touch input is present, the electronic device 10 may perform a second operation 950 described with reference to FIG. 9B.

In operation S920, the electronic device 10 may perform a first algorithm based on the touch data 310. For example, the electronic device 10 may perform an algorithm for recognizing the edge-of-hand of a user.

In operation S925, the electronic device 10 may identify whether the touch input corresponds to a valid input of the input motion. For example, the electronic device 10 may identify whether the touch input is a touch from the edge-of-hand of the user.

In operation S930, when the touch input is identified as corresponding to a valid input of the input motion, the electronic device 10 may perform second algorithm execution based on the touch data 310. For example, the electronic device 10 may operate a palm swipe inference model by inputting electrostatic touch frame information. The electronic device 10 may stop occurrence of a general touch event that is not an event corresponding to an input motion.

In operation S935, the electronic device 10 may store the inference result information in a queue. The electronic device 10 may process the following touch data. (i.e. processing of a next frame, CNT = CNT + 1)

In operation S940, when the touch input is identified as not corresponding to a valid input of the input motion, the electronic device 10 may generate a general touch event.

FIG. 9B is a diagram for explaining a method of performing an event corresponding to an input motion by an electronic device according to an embodiment.

In operation S960, the electronic device 10 may identify whether the number of obtained inference result information is greater than the second set value.

In operation S965, when the number of obtained inference result information is greater than the second set value, the first set value may correspond to the second value.

In operation S970, when the number of obtained inference result information is less than the second set value, the first set value may correspond to the first value, and the first value may also include 1.

In operation S980, the electronic device 10 may identify whether the number of consecutive inference result information indicating that the touch input corresponds to the input motion is greater than the first set value.

In operation S990, when the number of consecutive inference result information indicating that the touch input corresponds to the input motion is greater than the first set value, the electronic device 10 may perform the event 150 corresponding to the input motion.

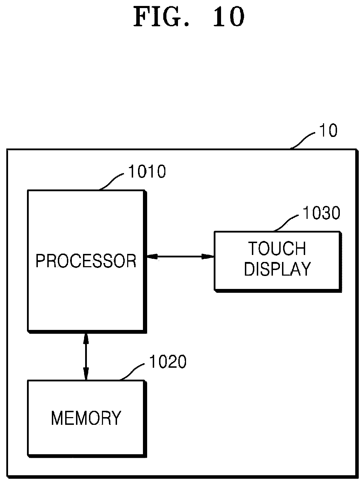

FIG. 10 shows an example of a block diagram of an electronic device according to an embodiment.

The electronic device 10 illustrated in FIG. 10 may be an electronic device that identifies an input motion, and may be, for example, a user terminal or a server device without limitation. For example, the electronic device 10 may be a user terminal such as a smart phone, a tablet PC, a mobile phone, a smart watch, a desktop computer, a laptop computer, a notebook, smart glasses, a navigation device, a wearable device, an augmented reality (AR) device, a virtual reality device, or a digital signal transceiver.

In an embodiment, the electronic device 10 may include, but is not limited to, at least one processor 1010, memory 1020, and a touch display 1030.

The processor 1010 may be electrically connected to components provided in the electronic device 10 and may perform operations or data processing related to control and/or communication of the components provided in the electronic device 10. In an embodiment, the processor 1010 may load and process a request, command or data received from at least one of other components into memory and store resulting data in the memory. According to various embodiments, the processor 1010 may include at least one of a general-purpose processor such as a central processing unit (CPU), an application processor (AP), a digital signal processor (DSP), a graphics-only processor such as a graphics processing unit (GPU), a vision processing unit (VPU), or an artificial intelligence (AI)-specific processor such as a neural processing unit (NPU).

The processor 1010 may be controlled to process input data according to a predefined operation rule or artificial intelligence model (e.g., neural network model) stored in memory. Alternatively, when the processor 1010 is an AI-specific processor, the AI-specific processors may be designed with a hardware structure specialized for processing a particular AI model.

The predefined operation rule or AI model is made through learning. Here, being made through learning may mean that a basic AI model is learned by using a large amount of learning data, based on a learning algorithm, thereby making a predefined operation rule or AI model set to perform a desired characteristic (or purpose). Such learning may be performed on a device itself on which AI according to the present disclosure is performed, or may be performed through a separate server and/or system. Examples of learning algorithms include, but are not limited to, supervised learning, unsupervised learning, semi-supervised learning, or reinforcement learning.

In a method of identifying an input motion of the electronic device 10 according to the present disclosure, an AI model (e.g., a second algorithm) may be used to recommend/execute an event (e.g., capture) corresponding to an input motion by using the touch data 310 (e.g., raw data obtained from an electrostatic panel) related to the touch display 1030 as a method of inferring or predicting the input motion (e.g., a swipe motion using an edge-of-hand). The processor 1010 may perform a preprocessing process on the data to convert the data into a form suitable for use as an input for the AI model. The AI models may be generated through learning. Here, being made through learning means that a basic AI model is learned by using a large amount of learning data, based on a learning algorithm, thereby making a predefined operation rule or AI model set to perform a desired characteristic (or purpose). The AI model may include a plurality of neural network layers. The plurality of neural network layers have a plurality of weight values, respectively, and perform a neural network operation through an operation between the operation result of a previous layer and the plurality of weight values.

Inference prediction is a technology that performs logical inference and prediction by determining information and includes knowledge/probability-based reasoning, optimization prediction, preference-based planning, and recommendation.

The memory 1020 may be electrically connected to the processor 1010 and may store one or more modules, at least one learning model, program, instruction, or data related to operations of the components provided in the electronic device 10. For example, the memory 1020 may store one or more modules, learning models, programs, instructions, or data for processing and controlling the processor 1010. The memory 1020 may include at least one type of storage medium from among a flash memory type, a hard disk type, a multimedia card micro type, a card type memory (e.g., an SD or XD memory), a random access memory (RAM), a static random access memory (SRAM), a read-only memory (ROM), an electrically erasable programmable read-only memory (EEPROM), a programmable read-only memory (PROM), a magnetic memory, a magnetic disk, or an optical disk.

In an embodiment, the memory 1020 may store data and information received or generated by the electronic device 10. For example, the memory 1020 may store raw image data, and camera metadata for the raw image data. For example, the memory 1020 may store inference result information related to an input motion for the first touch input and inference result information related to an input motion for at least one second touch input. The memory 1020 may store a queue in which inference result information related to the input motion for at least one second touch input is stored in the order of touch inputs. For example, the memory 1020 may store data and information received or generated by the electronic device 10 in a compressed form.

A module or model provided in the memory 1020 may include a program, model or algorithm that is executed according to the control or command of the processor 1010 and is configured to perform operations of deriving output data for input data. The memory 1020 may include at least one neural network model, AI model, machine learning model, or algorithm for image processing. In an embodiment, the memory 1020 may include a neural network model that identifies an input motion. The memory 1020 may include a plurality of parameter values (weight values) that constitute a neural network model. For example, the neural network model may be, but is not limited to, a learning model trained by supervised learning, unsupervised learning, semi-supervised learning, or reinforcement learning. The neural network model may include a plurality of neural network layers. The plurality of neural network layers have a plurality of weight values, respectively, and perform a neural network operation through an operation between the operation result of a previous layer and the plurality of weight values. The plurality of weight values of the plurality of neural network layers may be optimized according to the learning result of the neural network model. For example, the plurality of weight values may be updated such that a loss value or cost value obtained from the neural network model is reduced or minimized during a learning procedure. The neural network model may include a deep neural network (DNN), for example, a convolutional neural network (CNN), a deep neural network (DNN), a recurrent neural network (RNN), a restricted Boltzmann machine (RBM), a deep belief network (DBN), a bidirectional recurrent deep neural network (BRDNN), or deep Q-networks, but is not limited thereto.

Some modules that perform at least one operation of the electronic device 10 may be implemented as a hardware module, a software module, and/or a combination thereof. The memory 1020 may include software modules that perform at least some of the operations of the electronic device 10 described above. For example, the memory 1020 may include a first algorithm module and a second algorithm module. At least some of the modules provided in the memory 1020 may include a plurality of sub-modules or may include one module. In an embodiment, each module provided in the memory 1020 may be executed by the processor 1010 to perform an operation.

The electronic device 10 may include more components than those illustrated in FIG. 2. For example, the electronic device 10 may further include a communication interface (or communication module) configured to communicate with an external device. For example, the electronic device 10 may further include a transceiver configured to transmit and receive a signal with the external device.

In an embodiment, the electronic device 10 may further include an input/output device and/or an input/output interface. For example, the electronic device 10 may further include a lens and an image sensor for capturing an image. For example, the electronic device 10 may further include a display configured to output image data.

At least one processor 1010 may control a series of processes to allow the electronic device 10 to operate according to at least one embodiment shown in FIGS. 1 to 9. That is, the at least one processor 1010 may control each component of the electronic device 10 to operate. In an embodiment, the at least one processor 1010 may execute one or more instructions stored in memory. In an embodiment, the at least one processor 1010 may execute one or more instructions to perform an operation of identifying an input motion.

The touch display 1030 may detect a user touch input and output a touch event value corresponding to a detected touch signal. The touch display 1030 may be implemented with various types of touch sensors, such as electrostatic, pressure-sensitive, or piezoelectric sensors. The electrostatic method is a method that detects micro-electricity generated by the body of a user and calculates touch coordinates by using a dielectric coated on a surface of a touch display when a part of the body of the user touches the surface of the touch display. The pressure-sensitive method is a method that uses two electrode plates built in a touch display to detect current flowing when a user touches a screen to cause upper and lower plates at the touched point to come into contact with each other and calculate touch coordinates. A touch event occurring on a touch display may be generated primarily by a human finger, but may also be generated by an object including a conductive material capable of applying a change in electrostatic capacitance.

In an embodiment, the at least one processor 1010 may be configured to execute the one or more instructions to identify whether a first touch input to the touch display 1030 corresponds to a valid input of the input motion based on the touch data 310 related to the touch display 140, 1030 and the first algorithm 20.

According to the present disclosure, an effect of saving H/W resource costs may be provided. When all touch data is driven as a model, excessively H/W resource costs may be caused, and thus the electronic device 10 according to an embodiment may perform the first algorithm 20 to filter input touch data of the second algorithm 30. Accordingly, the electronic device 10 may operate the second algorithm when identifying whether the touch input is a valid input (e.g., the edge-of-hand of the user) based on the first algorithm.

According to the present disclosure, the input motion is determined secondarily, thereby providing an effect of reducing a probability of false positive. Even if a false positive occurs for a valid input according to the first algorithm, the input motion is inferred according to the second algorithm (e.g., whether the input motion is a swipe motion by the edge-of-hand of the user), and thus a probability of a false operation is reduced.

**In** an embodiment, the at least one processor 1010 may identify inference result information related to an input motion for the first touch input based on the touch data and the second algorithm 30 when the first touch input corresponds to the valid input.

According to the present disclosure, an inference model for an input motion is performed by inputting touch data (i.e., entire frame) rather than touch coordinates, an effect of improving the recognition accuracy for input motion may be provided. For unique touch forms such as the edge-of-hand, an actual touch area may vary from person to person, and thus it may not be easy to identify the touch by using only a coordinate location value, and a likelihood of false positive is relatively high. On the other hand, in the present disclosure, electrostatic raw data itself of a touch panel is used, and thus a value changes depending on a pressing force, thereby reducing cases of false positive.

According to the present disclosure, an inference model for an input motion is performed by inputting touch data (i.e., entire frame) rather than touch coordinates, a robust effect for various cases may be provided. For example, in the case of touch coordinates, various arithmetic values increase significantly during multi-touch, which increases a probability of false positive. However, according to the present disclosure, there is no information corruption even in a multi-touch situation, and thus there is a low probability of false positive.

According to the present disclosure, an effect of saving memory space may be provided. The electronic device 10 may perform model inference by applying the second algorithm for each frame, and thus may not store all touch data from a moment of input (press) to a moment of release of the touch input. Therefore, according to the present disclosure, based on a 90 Hz touch display, memory space equivalent to 135 frames may be advantageously saved when a touch input time is 1.5 seconds.

According to an embodiment, the at least one processor 1010 may identify whether the first touch input and the at least one second touch input correspond to the input motion 110 based on the inference result information related to the input motion for the first touch input and the inference result information related to the input motion for the at least one second touch input.

In an embodiment, the inference result information related to an input motion for a first touch input may correspond to information on a possibility that the first touch input corresponds to the input motion, or information indicating whether the first touch input corresponds to the input motion.

In an embodiment, the at least one processor 1010 may identify a touch area 320 corresponding to the first touch input based on the touch data 310.

In an embodiment, the at least one processor 1010 may identify the first touch input as corresponding to the valid input when the length of the touch area is greater than a length threshold.

The present disclosure may provide an effect of identifying an input motion by recognizing the characteristic of a user. For example, it is difficult to determine the characteristic of the user based on a touch area alone, such as the edge-of-hand or general finger touch. However, the present disclosure may provide a method of identifying whether a touch input corresponds to a certain input motion by identifying a situation in which the edge-of-hand of the user is input to a touch display through a first algorithm and inferring features of inputs having temporal characteristics through a second algorithm.

In an embodiment, the second algorithm 30 may include at least one of a first layer related to feature extraction, a second layer related to a temporal feature, or a third layer related to feature classification.

In an embodiment, the at least one processor 1010 may identify, from among the inference result information related to the input motion for the first touch input and the inference result information related to the input motion for the at least one second touch input, inference result information indicating that a touch input corresponds to the input motion 110.

In an embodiment, the at least one processor 1010 may identify that the first touch input and the at least one second touch input correspond to the input motion 110 when the number of inference result information that is consecutive and indicates that the touch input corresponds to the input motion 110 is greater than a first set value.

According to the present disclosure, the electronic device 10 may finally identify whether the touch input is the input motion 110 by using the inference result information that is consecutive and indicates that the touch input corresponds to the input motion 110f, thereby reducing a probability of false positives. Touch data immediately prior to a release state is often inferred as not being an input motion (e.g., swipe). This is because the touch data is unstable as contact between the hand and the touch display 140 is about to be lost. Therefore, to exclude unstable data and identify whether the touch input is the input motion 110, the electronic device 10 may use the inference result information that is consecutive and indicates that the touch input corresponds to the input motion 110.

In an embodiment, the inference result information indicating that the touch input corresponds to an input motion may be at least one piece of information that is consecutive in the order of touch inputs.

In an embodiment, when the number of the inference result information related to the input motion for the first touch input and the inference result information related to input motion for the at least one second touch input is less than the second set value, the first set value may correspond to a first value.

In an embodiment, when the number of the inference result information related to the input motion for the first touch input and the inference result information related to input motion for the at least one second touch input is greater than or equal to the second set value, the first set value may correspond to a second value.

In an embodiment, the first value may be a value less than the second value.

According to the present disclosure, the first set value, which is a reference number of inference result information that is consecutive and indicates that the touch input corresponds to the input motion 110, may be set in consideration of a speed at which the user inputs the input motion, and thus the present disclosure may provide an effect of identifying an input motion in consideration of the user of the electronic device 10. (e.g., when the user performs an input motion in a very short time, the first value may be set small.)

In an embodiment, the at least one processor 1010 may perform the event 150 corresponding to the input motion when the first touch input and the at least one second touch input correspond to the input motion 110.

In an embodiment, the event may correspond to a process of obtaining (e.g., capturing) an image displayed on the touch display 140, 1030.

In an embodiment, the at least one processor 1010 may obtain the first touch input on the touch display 140, 1030.

In an embodiment, the touch data may correspond to electrostatic capacitance data of the touch display 140, 1030 to which the first touch input is input.

In an embodiment, the inference result information related to the input motion for the at least one second touch input may be identified based on other touch data for the touch display 140, 1030 and the second algorithm.

In an embodiment, the at least one second touch input may correspond to a valid input of the input motion and may be identified based on the first algorithm and the other touch data.

In an embodiment, the at least one processor 1010 may store inference result information related to an input motion for the first touch input in a queue in which inference result information related to an input motion for at least one second touch input is stored in the order of touch inputs.

A device-readable storage medium may be provided in the form of a non-transitory storage medium. Here, the term 'non-transitory storage medium' simply means a tangible device that does not contain a signal (e.g. electromagnetic wave), and the term does not distinguish between cases in which data is stored semipermanently or temporarily on a storage medium. For example, the 'non-transitory storage medium' may include a buffer in which data is temporarily stored.

According to an embodiment, the methods according to various embodiments disclosed in the present specification may be provided as provided in a computer program product. The computer program product may be traded between a seller and a buyer as a commodity. The computer program product may be distributed in the form of a machine-readable storage medium (e.g., compact disc read only memory (CD-ROM)), or may be distributed online (e.g., by download or upload) via an application store or directly between two user devices (e.g., smartphones). In the case of online distribution, at least a portion of the computer program product (e.g., a downloadable app) may be temporarily stored or temporarily generated in a device-readable storage medium, such as memory of a server of a manufacturer, server of an application store, or intermediary server.

**Claims**

1. A method of identifying an input motion by an electronic device (10), the method comprising:

   based on touch data (310) related to touch displays (140, 1030) and a first algorithm (20), identifying whether a first touch input to the touch display (140, 1030) corresponds to a valid input of the input motion (S210);
   when the first touch input corresponds to the valid input, identifying inference result information related to the input motion for the first touch input based on the touch data and a second algorithm (30) (S220); and
   based on the inference result information related to the input motion for the first touch input and inference result information related to the input motion for at least one second touch input, identifying whether the first touch input and the at least one second touch input correspond to the input motion (110) (S230).

2. The method of claim 1, wherein the inference result information related to the input motion for the first touch input corresponds to information on a possibility that the first touch input corresponds to the input motion, or information indicating whether the first touch input corresponds to the input motion.

3. The method of any one of claims 1 and 2, wherein the identifying of whether the first touch input to the touch display corresponds to the valid input of the input motion comprises:

identifying a touch area (320) corresponding to the first touch input based on the touch data (310); and
when a length of the touch area is greater than a length threshold, identifying that the first touch input corresponds to the valid input.

4. The method of any one of claims 1 to 3, wherein the second algorithm (30) comprises at least one of a first layer related to feature extraction, a second layer related to a temporal feature, or a third layer related to feature classification.

5. The method of any one of claims 1 to 4, wherein the identifying of whether the first touch input and the at least one second touch input correspond to the input motion comprises:

identifying, from among the inference result information related to the input motion for the first touch input and the inference result information related to the input motion for the at least one second touch input, inference result information indicating that a touch input corresponds to the input motion (110); and
when a number of the inference result information that is consecutive and indicates that the touch input corresponds to the input motion (110) is greater than a first set value, identifying that the first touch input and the at least one second touch input correspond to the input motion (110).

6. The method of claim 5, wherein, when a number of the inference result information related to the input motion for the first touch input and the inference result information related to input motion for the at least one second touch input is less than a second set value, the first set value corresponds to a first value,

when the number of the inference result information related to the input motion for the first touch input and the inference result information related to input motion for the at least one second touch input is greater than or equal to the second set value, the first set value corresponds to a second value, and
the first value is less than the second value.

7. The method of any one of claims 1 to 6, further comprising, when the first touch input and the at least one second touch input correspond to the input motion (110), performing an event (150) corresponding to the input motion,
wherein the event corresponds to a process of obtaining an image displayed on the touch display (140, 1030).

8. The method of any one of claims 1 to 7, further comprising obtaining the first touch input on the touch display (140, 1030),
wherein the touch data corresponds to electrostatic capacitance data of the touch display (140, 1030) to which first touch input is input.

9. The method of any one of claims 1 to 8, wherein the inference result information related to the input motion for the at least one second touch input is identified based on other touch data for the touch display (140, 1030) and the second algorithm, and
the at least one second touch input corresponds to a valid input of the input motion and is identified based on the first algorithm and the other touch data.

10. The method of any one of claims 1 to 9, further comprising storing the inference result information related to the input motion for the first touch input in a queue in which the inference result information related to the input motion for the at least one second touch input is stored in order of touch inputs.

11. An electronic device (10) for identifying an input motion, the electronic device (10) comprising:

a touch display (140, 1030);
memory (1020) storing one or more instructions; and
at least one processor (1010) configured to execute the one or more instructions stored in the memory (1020),
wherein the at least one processor (1010) is configured to execute the one or more instructions to, based on touch data (310) related to touch displays (140, 1030) and a first algorithm (20), identify whether a first touch input to the touch display (140, 1030) corresponds to a valid input of the input motion, when the first touch input corresponds to the valid input, identify inference result information related to the input motion for the first touch input based on the touch data and a second algorithm (30), and based on the inference result information related to the input motion for the first touch input and inference result information related to the input motion for at least one second touch input, identify whether the first touch input and the at least one second touch input correspond to the input motion (110).

**12.** The electronic device (10) of claim 11, wherein the inference result information related to the input motion for the first touch input corresponds to information on a possibility that the first touch input corresponds to the input motion, or information indicating whether the first touch input corresponds to the input motion.

**13.** The electronic device (10) of any one of claims 11 and 12, wherein the at least one processor (1010) is configured to identify a touch area (320) corresponding to the first touch input based on the touch data (310), and when a length of the touch area is greater than a length threshold, identify that the first touch input corresponds to the valid input.

**14.** The electronic device (10) of any one of claims 11 to 13, wherein the second algorithm (30) comprises at least one of a first layer related to feature extraction, a second layer related to a temporal feature, or a third layer related to feature classification.

**15.** The electronic device (10) of any one of claims 11 to 14, wherein the at least one processor (1010) is configured to identify, from among the inference result information related to the input motion for the first touch input and the inference result information related to the input motion for the at least one second touch input, inference result information indicating that a touch input corresponds to the input motion (110), and when a number of the inference result information that is consecutive and indicates that the touch input corresponds to the input motion (110) is greater than a first set value, identify that the first touch input and the at least one second touch input correspond to the input motion (110).

# FIG. 1

EP 4 610 792 A1

# FIG. 2

START

BASED ON TOUCH DATA RELATED TO TOUCH DISPLAY AND FIRST ALGORITHM, IDENTIFY WHETHER FIRST TOUCH INPUT TO TOUCH DISPLAY CORRESPONDS TO VALID INPUT OF INPUT MOTION — S210

WHEN FIRST TOUCH INPUT CORRESPONDS TO VALID INPUT, IDENTIFY INFERENCE RESULT INFORMATION RELATED TO INPUT MOTION FOR FIRST TOUCH INPUT BASED ON TOUCH DATA AND SECOND ALGORITHM — S220

BASED ON INFERENCE RESULT INFORMATION RELATED TO INPUT MOTION FOR FIRST TOUCH INPUT AND INFERENCE RESULT INFORMATION RELATED TO INPUT MOTION FOR AT LEAST ONE SECOND TOUCH INPUT, IDENTIFY WHETHER FIRST TOUCH INPUT AND AT LEAST ONE SECOND TOUCH INPUT CORRESPOND TO INPUT MOTION — S230

END

# FIG. 3

# FIG. 4A

| 0 | 1 | 1 | 0 | 0 | 0 | 0 |
|---|---|---|---|---|---|---|
| 0 | 1 | 1 | 1 | 0 | 0 | 0 |
| 1 | 1 | 1 | 1 | 0 | 0 | 0 |
| 1 | 1 | 1 | 1 | 0 | 0 | 0 |
| 1 | 1 | 1 | 1 | 1 | 0 | 0 |
| 1 | 1 | 1 | 1 | 1 | 0 | 0 |
| 1 | 1 | 1 | 1 | 1 | 0 | 0 |
| 1 | 1 | 1 | 1 | 1 | 0 | 0 |
| 1 | 1 | 1 | 1 | 1 | 1 | 0 |
| 1 | 1 | 1 | 1 | 1 | 1 | 0 |
| 0 | 1 | 1 | 1 | 1 | 1 | 0 |
| 0 | 1 | 1 | 1 | 1 | 1 | 0 |
| 0 | 1 | 1 | 1 | 1 | 1 | 1 |
| 0 | 1 | 1 | 1 | 1 | 1 | 1 |
| 0 | 1 | 1 | 1 | 1 | 1 | 1 |
| 0 | 0 | 1 | 1 | 1 | 1 | 1 |
| 0 | 0 | 1 | 1 | 1 | 1 | 1 |
| 0 | 0 | 1 | 1 | 1 | 1 | 0 |
| 0 | 0 | 1 | 1 | 1 | 0 | 0 |

410

420

# FIG. 4B

# FIG. 4C

# FIG. 5

510

FIRST
LAYER
520

522

532
SECOND
LAYER
530

536

534

THIRD
LAYER
540

**FIG. 6**

FIG. 7

FIG. 8

# FIG. 9A

START FIRST OPERATION 900

RECEIVE TOUCH DATA RELATED TO TOUCH DISPLAY — S910

WHETHER TOUCH INPUT IS PRESENT? — S915

NO → SECOND OPERATION 950

YES

PERFORM FIRST ALGORITHM — S920

WHETHER TOUCH INPUT IS VALID INPUT? — S925

NO → PROCESS GENERAL TOUCH EVENT — S940 → END

YES

PERFORM SECOND ALGORITHM — S930

STORE INFERENCE RESULT INFORMATION IN QUEUE — S935

# FIG. 9B

START SECOND
OPERATION 950

S960

WHETHER NUMBER
OF OBTAINED INFERENCE
RESULT INFORMATION IS GREATER THAN
PRESET NUMBER OF
INFERENCE RESULT
INFORMATION?

NO

YES

S970

PRESET NUMBER OF CONSECUTIVE
INFERENCE RESULT INFORMATION
CORRESPONDS TO FIRST VALUE

S965

PRESET NUMBER OF CONSECUTIVE
INFERENCE RESULT INFORMATION
CORRESPONDS TO SECOND VALUE

S980

DOES NUMBER OF
CONSECUTIVE INFERENCE
RESULT INFORMATION, WHICH IS
GREATER THAN PRESET NUMBER OF
CONSECUTIVE INFERENCE
RESULT INFORMATION,
EXIST?

NO

YES

PERFORM EVENT CORRESPONDING
TO INPUT MOTION

S990

END

# FIG. 10

| | INTERNATIONAL SEARCH REPORT | International application No. |
|---|---|---|
| | | **PCT/KR2023/016635** |

| **A.** | **CLASSIFICATION OF SUBJECT MATTER** |
|---|---|

**G06F 3/041**(2006.01)i; **G06N 3/0442**(2023.01)i

According to International Patent Classification (IPC) or to both national classification and IPC

| **B.** | **FIELDS SEARCHED** |
|---|---|

Minimum documentation searched (classification system followed by classification symbols)

G06F 3/041(2006.01); G06F 3/044(2006.01); G06N 20/00(2019.01); G06N 3/08(2006.01); H04B 1/40(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 입력(input), 모션(motion), 식별(identify), 터치(touch), 알고리즘(algorithm), 추론 (inference), 손날(hand blade), 손가락(finger), 스와이프(swipe)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| Y | KR 10-2013-0047790 A (SAMSUNG ELECTRONICS CO., LTD.) 09 May 2013 (2013-05-09) See paragraphs [0026], [0028], [0037]-[0038] and [0043]; claims 14-15 and 17; and figures 3a-3c. | 1-5,7-15 |
| A | | 6 |
| Y | KR 10-2022-0102042 A (SAMSUNG ELECTRONICS CO., LTD.) 19 July 2022 (2022-07-19) See paragraphs [0006]-[0007], [0087] and [0102]-[0103]; claim 1; and figures 3 and 5. | 1-5,7-15 |
| A | KR 10-2019-0104101 A (LG ELECTRONICS INC.) 06 September 2019 (2019-09-06) See paragraphs [0019], [0025], [0033], [0054], [0071], [0089], [0102], [0112], [0135]-[0138], [0158] and [0231]. | 1-15 |
| A | KR 10-2014-0086805 A (SAMSUNG ELECTRONICS CO., LTD. et al.) 08 July 2014 (2014-07-08) See paragraphs [0032]-[0097]; and figures 1-15. | 1-15 |

| ✓ Further documents are listed in the continuation of Box C. | ✓ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **25 January 2024** | **25 January 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2023/016635** |

### C.    DOCUMENTS CONSIDERED TO BE RELEVANT

| Category* | Citation of document, with indication, where appropriate, of the relevant passages | Relevant to claim No. |
| --- | --- | --- |
| A | KR 10-2012-0072932 A (SAMSUNG ELECTRONICS CO., LTD.) 04 July 2012 (2012-07-04) See paragraphs [0016]-[0093]; and figures 1-13. | 1-15 |

Form PCT/ISA/210 (second sheet) (July 2022)

## INTERNATIONAL SEARCH REPORT
### Information on patent family members

International application No.

**PCT/KR2023/016635**

| Patent document cited in search report | | | Publication date (day/month/year) | Patent family member(s) | | | Publication date (day/month/year) |
|---|---|---|---|---|---|---|---|
| KR | 10-2013-0047790 | A | 09 May 2013 | CN | 103218090 | A | 24 July 2013 |
| | | | | CN | 103218090 | B | 25 August 2017 |
| | | | | EP | 2587360 | A2 | 01 May 2013 |
| | | | | EP | 2587360 | A3 | 29 November 2017 |
| | | | | EP | 2587360 | B1 | 20 April 2022 |
| | | | | JP | 2013-097798 | A | 20 May 2013 |
| | | | | JP | 6169344 | B2 | 26 July 2017 |
| | | | | KR | 10-1880653 | B1 | 20 August 2018 |
| | | | | US | 2013-0106776 | A1 | 02 May 2013 |
| | | | | US | 9495095 | B2 | 15 November 2016 |
| KR | 10-2022-0102042 | A | 19 July 2022 | EP | 4261663 | A1 | 18 October 2023 |
| | | | | US | 2023-0359348 | A1 | 09 November 2023 |
| | | | | WO | 2022-154236 | A1 | 21 July 2022 |
| KR | 10-2019-0104101 | A | 06 September 2019 | US | 10949022 | B2 | 16 March 2021 |
| | | | | US | 2020-0012382 | A1 | 09 January 2020 |
| KR | 10-2014-0086805 | A | 08 July 2014 | US | 2014-0184566 | A1 | 03 July 2014 |
| KR | 10-2012-0072932 | A | 04 July 2012 | CN | 103270475 | A | 28 August 2013 |
| | | | | CN | 103270475 | B | 19 September 2017 |
| | | | | EP | 2656182 | A2 | 30 October 2013 |
| | | | | EP | 2656182 | B1 | 18 August 2021 |
| | | | | KR | 10-1718893 | B1 | 05 April 2017 |
| | | | | US | 10564759 | B2 | 18 February 2020 |
| | | | | US | 11157107 | B2 | 26 October 2021 |
| | | | | US | 2012-0162111 | A1 | 28 June 2012 |
| | | | | US | 2020-0159364 | A1 | 21 May 2020 |
| | | | | WO | 2012-086957 | A2 | 28 June 2012 |
| | | | | WO | 2012-086957 | A3 | 04 October 2012 |

Form PCT/ISA/210 (patent family annex) (July 2022)